# EUROPEAN PATENT SPECIFICATION

(11) **EP 2 778 812 B1**
(45) Date of publication and mention of the grant of the patent: **16.01.2019**
(21) Application number: 14154937.8
(22) Date of filing: 13.02.2014
(51) Int. Cl.: G05B 19/042, G05B 19/05

(54) **State machine configurator**
Zustandsmaschinenkonfigurator
Configurateur de machine à état

(30) Priority: 12.03.2013 US 201313797618
(43) Date of publication of application: 17.09.2014
(73) Proprietor: Rockwell Automation Technologies, Inc., Mayfield Heights, OH 44124 (US)
(72) Inventor: Brandes, Russell, Brunswick, OH Ohio 44212 (US)
(74) Representative: Grünecker Patent- und Rechtsanwälte PartG mbB

(56) References cited:
- EP-A1- 1 988 452
- GB-A- 2 341 240
- US-A1- 2003 066 050

## Description

### TECHNICAL FIELD

The subject application relates generally to industrial automation, and, more particularly, to systems and methods for creating customized state machines for execution in industrial controllers.

### BACKGROUND

Industrial controllers and their associated I/O devices are central to the operation of modern automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such programming structures. The controller receives any combination of digital, analog, or networked data signals from the field devices indicating current states of the process (*e.g.,* temperature, position, part presence or absence, fluid level, *etc.*), and executes the control program to automate decision-making for the process based on the received signals. The controller then outputs appropriate digital, analog, or networked control signaling to the field devices in accordance with the decisions made by the control program. These outputs can include device actuation signals, temperature or position control signals, motion control commands, commands to machining or material handling robots, and the like.

System designers sometimes use a state machine approach to designing automation system behavior. The state machine approach assumes that, at any given time, the system will be in one of a predetermined number of states, and the events that Cause the system to transition from one state to another are defined in advance. Developing industrial controller programs based on a predetermined state machine design can be a laborious task, particularly as the automation systems become more complex.

The above-described deficiencies of today's industrial control and business systems are merely intended to provide an overview of some of the problems of conventional systems, and are not intended to be exhaustive. Other problems with conventional systems and corresponding benefits of the various non-limiting embodiments described herein may become further apparent upon review of the following description.

EP1 988 452 A1 discloses a system having a graphical user interface with a display unit. A data processing unit produces and edits a program code executable in a microcontroller for flow control of an automatic heating system. The data processing unit generates a graphical representation of the flow control coded in the program code on the display unit. The graphical representation is generated such that conditions of the heating system are represented by condition symbols and a transition between two conditions of the system is represented by a transition symbol.

GB 2 341 240 A discloses a system and method for batch process control wherein a phase logic module operable in accordance with a state machine model is integrated within a programmable controller or within a data processing element.

US 2003/0066050 A1 discloses a method and system for capturing a Finite State Machine (FSM) description of the desired behaviour of a device, and converting that description into a program that is executable by the device.

It is the object of the present invention to provide an improved method and system for creating customized state machines for execution in industrial controllers in an efficient manner.

This object is solved by the subject matter of the independent claims.

Embodiments are defined by the dependent claims.

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

One or more embodiments of the present disclosure relate to creation of customized state machines for execution in an industrial controller. To this end, a state machine configurator can provide an intuitive interface that allows a user to develop a customized state machine for control of an industrial automation system. The state machine configurator can receive configuration data from a user describing the required behavior of an automation system or machine in terms of possible machine states and transition events between the states, and compile the state machine configuration data to yield a state machine instruction that can be imported into an industrial controller program (*e.g.,* ladder logic, sequential function chart, *etc*.) to perform control of the automation system in accordance with the state machine. Once deployed in the controller, the state machine instruction can be protected in the controller program to prevent modification, ensuring that the verified state machine represented by the instruction cannot be changed or circumvented.

In some embodiments, the state machine configurator can allow a user to associate selected state transition commands with respective groups, and define which commands will initiate transition to a certain group. In this way, state machines can be defined within other state machines, providing a means to create complex state machines for execution in the controller.

Some embodiments of the state machine configurator can also allow creation of role-based state machines, allowing state transition behavior of the automation system to be determined in part by a role of the user interacting with the system (*e.g.,* operator, maintenance, engineering, *etc.*).

The state machine configurator can also generate graphical objects (*e.g.,* faceplates, graphical windows, *etc*.) based on the state machine design that can be imported into an operator interface application to render near real-time state information for the system during runtime.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a high-level overview of an exemplary, generalized control environment in which state machine instructions created using the state machine configurator can be used.
FIG. 2 illustrates an exemplary state machine representing states and transition events for an example automation system.
FIG. 3 is a block diagram of a hardware embodiment of an exemplary state machine configurator.
FIG. 4 is a block diagram illustrating functionality of an exemplary state machine configurator.
FIG. 5 illustrates communication between a graphical representation of a state machine and a state machine instruction.
FIG. 6 illustrates an example state machine that defines interactions between groups.
FIG. 7 illustrates configuration of such role-specific levels.
FIG. 8 illustrates an exemplary state machine configurator interface that can be used to develop customized state machines.
FIG. 9 is a flowchart of an example methodology for creating executable state machines for control of an industrial process.
FIG. 10 is a flowchart of an example methodology for defining state machine groups in a state machine configurator.
FIG. 11 is a flowchart of an example methodology for implementing role-specific state machines for controlling an industrial process or automation system
FIG. 12 is an example computing environment.
FIG. 13 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a hard disk drive, multiple storage drives (of optical or magnetic storage medium) including affixed (*e.g.,* screwed or bolted) or removably affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (*e.g.,* data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; *e.g.,* the set with no elements therein. Thus, a "set" in the subject disclosure includes one or more elements or entities. As an illustration, a set of controllers includes one or more controllers; a set of data resources includes one or more data resources; *etc.* Likewise, the term "group" as utilized herein refers to a collection of one or more entities; *e.g*., a group of nodes refers to one or more nodes.

Various aspects or features will be presented in terms of systems that may include a number of devices, components, modules, and the like. It is to be understood and appreciated that the various systems may include additional devices, components, modules, *etc.* and/or may not include all of the devices, components, modules *etc.* discussed in connection with the figures. A combination of these approaches also can be used.

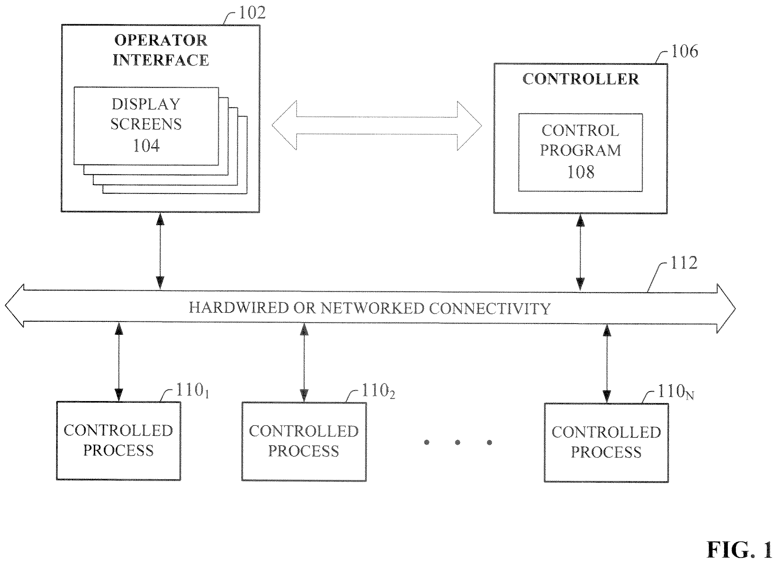

FIG. 1 illustrates an exemplary, generalized control environment in which the state machine configurator of this disclosure can be used. An industrial facility can comprise one or more controlled processes 110₁-110_{N} relating to product manufacture, batch processing, material handling, or other such industrial functions. Controlled processes 110₁-110_{N} can be monitored and controlled by at least one controller 106. Controller 106 can comprise an industrial controller, such as a programmable logic controller (PLC) or other such programmable automation controller (PAC), that executes a control program 108 to facilitate monitoring and control of controlled processes 110₁-110_{N}. Controller 106 may also comprise a soft controller executed on a personal computer or other hardware platform. Control program 108 can comprise any conceivable type of code used to process input signals read into the controller 106 and to control output signals from the controller, including but not limited to ladder logic, sequential function charts, function block diagrams, or structured text. Data read into or generated by controller 106 can be stored in memory addresses within controller memory, which can comprise native memory or removable storage media.

Controller 106 can communicatively interface with controlled processes 110₁-110_{N} over hardwired or networked connections 112. For example, controller 106 can be equipped with native hardwired inputs and outputs that communicate with one or more field devices associated with the controlled processes 110₁-110_{N} to effect control of the devices. The native controller I/O can include digital I/O that transmits and receives discrete voltage signals to and from the field devices, or analog I/O that transmits and receives analog voltage or current signals to and from the devices. The controller I/O can communicate with the controller's processor over a backplane such that the digital and analog signals can be read into and controlled by the control programs. Controller 106 can also communicate with field devices over a network using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. It is to be appreciated that controller 106 is not limited to the above specifications, and can include virtually any type of controller used to control an industrial process.

The system can also include at least one operator interface 102 (*e.g.,* a human-machine interface, or HMI) communicatively coupled with controller 106 (*e.g., via* network 112). Operator interface 102 can exchange data with controller 106 to facilitate visualization of information relating to controlled processes 110₁-110_{N} and to allow an operator to submit data to controller 106 in the form of issued commands (*e.g.,* cycle start commands, device actuation commands, *etc*.), setpoint values, and the like. Operator interface 102 can include one or more display screens 104 through which the operator interacts with the controller 106, and thereby with the controlled processes 110₁-110_{N}. Exemplary display screens can visualize present states of the controlled processes 110₁-110_{N} using graphical representations of the processes that display metered or calculated values, employ color or position animations based on state, render alarm notifications, or employ other such techniques for presenting relevant data to the operator. Data presented in this manner is read from controller 106 by operator interface 102 and presented on one or more of the display screens 104 according to display formats chosen by the system developer.

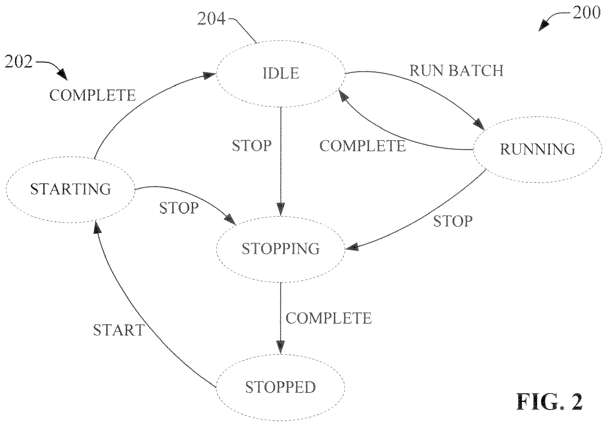

System designers often use state machine diagrams as a design tool for developing suitable control programs (*e.g.,* control program 108) for their automation systems. FIG. 2 illustrates an exemplary state machine 200 representing states and transition events for an example automation system. According to state machine modeling, an automation system or machine exists, at any given time, in one of a predefined set of states. Exemplary state machine 200 models a set of possible system states 204 as well as transition events 202 that cause the system to transition from one state to another. For example, according to state machine 200, if the system is currently in the "Idle" state and receives a "Run Batch" command, the system will transition to a "Running" state. While in the "Running" state, the system may receive either a "Complete" indication that causes the machine to transition back to the "Idle" state, or a "Stop" command that causes the system to transition to the "Stopping" state.

A design engineer may model the required states and transition events for their system as a state machine diagram (*e.g.,* state machine 200), and attempt to implement the model as controller programming (*e.g.,* ladder logic, sequential function charts, *etc*.). However, once deployed in a running system, the control program is often subject to modifications by other plant personnel (*e.g.,* maintenance personnel), which may cause the programmed state transition definitions to be inadvertently circumvented. That is, while some program modifications may be implemented without affecting the intended state machine operation - for example, a modification to the programming that controls how the "running" state is performed but does not change the conditions that cause transition to or from that state - other program modifications may cause the predefined state transitions to be altered in a manner not intended by the system designer.

In order to simplify state machine programming as well as to prevent modification of the intended state machine operation, one or more embodiments of this disclosure provide a state machine configurator that can receive state machine configuration input from a user and generate a corresponding state machine instruction that can be executed in an industrial controller. The resulting state machine instruction can perform supervisory control of the underlying controller programming to ensure adherence to the defined state machine operation. The state machine instruction can be protected within the industrial controller such that the underlying state and transition definitions cannot be changed in the controller. In one or more embodiments, the state machine configurator can be included as a tool in a control program development platform.

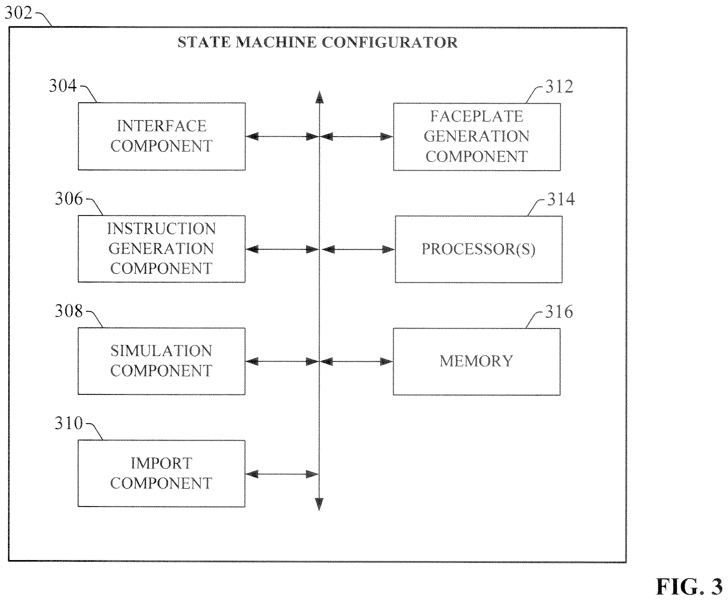

FIG. 3 is a block diagram of an exemplary state machine configurator that can be used to implement protected state machine control in an industrial controller. Aspects of the systems, apparatuses, or processes explained in this disclosure can constitute machine-executable components embodied within machine(s), *e.g.,* embodied in one or more computer-readable mediums (or media) associated with one or more machines. Such components, when executed by one or more machines, *e.g*., computer(s), computing device(s), automation device(s), virtual machine(s), *etc*., can cause the machine(s) to perform the operations described.

State machine configurator 302 can include one or more of an interface component 304, an instruction generation component 306, a simulation component 308, an import component 310, a faceplate generation component 312, one or more processors 314, and memory 316. In various embodiments, one or more of the interface component 304, instruction generation component 306, simulation component 308, import component 310, faceplate generation component 312, one or more processors 314, or memory 316 can be electrically and/or communicatively coupled to one another to perform one or more of the functions of the state machine configurator 302. In some embodiments, components 304, 306, 308, 310, and 312 can comprise software instructions stored on memory 316 and executed by processor(s) 314. The state machine configurator 302 may also interact with other hardware and/or software components not depicted in FIG. 3. For example, processor(s) 314 may interact with one or more external user interface devices, such as a keyboard, a mouse, a display monitor, a touchscreen, or other such interface devices.

Interface component 304 is configured to receive user input and to render output to the user in any suitable format (*e.g.,* visual, audio, tactile, *etc*.). User input can comprise, for example, configuration information defining allowable states and state transitions for a given control application. User input can also comprise group definitions and role definitions, as will be described in more detail below. Instruction generation component 306 is configured to compile the state machine configuration data entered by the user to generate an executable state machine instruction. Simulation component 308 can be configured to test and simulate a pending state machine design based on the configuration data provided by the user. The import component 310 can be configured to import a state machine instruction generated by instruction generation component 306 into an industrial control program. Faceplate generation component 312 can be configured to generate a graphical object corresponding to the state machine developed by the user to render live state information on an operator interface. The one or more processors 314 can perform one or more of the functions described herein with reference to the systems and/or methods disclosed. Memory 316 can be a computer-readable storage medium storing computer-executable instructions and/or information for performing the functions described herein with reference to the systems and/or methods disclosed.

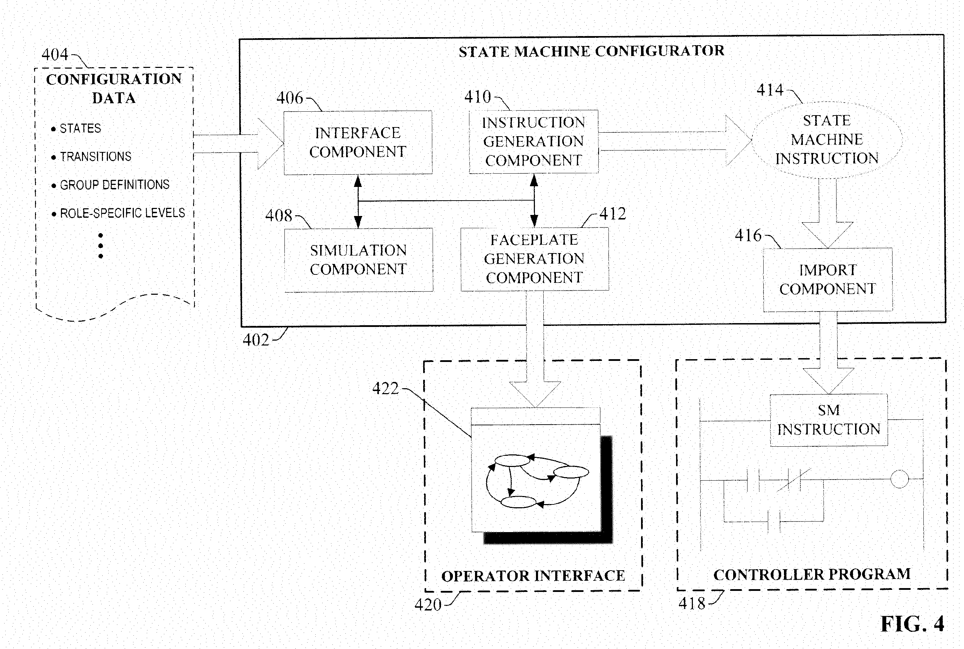

FIG. 4 is a block diagram of an exemplary state machine configurator 402 according to one or more embodiments of this disclosure. State machine configurator 402 can be implemented, for example, in a development platform used to create industrial control programs for execution in an industrial controller. Alternatively, state machine configurator 402 can be a stand-alone system used to generate state machine instructions to be imported into a separate program development environment for inclusion in an industrial control program.

In the present example, a developer provides configuration data 404 to state machine configurator 402 via interface component 406. Configuration data 404 can include, for example, identification of the system states comprising the desired state machine and the transition events between the states. Interface component 406 can provide an intuitive interface for specifying the required states and transitions. For example, in one or more embodiments, interface component 406 can present a list of common predefined system states (*e.g.,* S88 states such as "Idle," "Running," "Stopped," *etc*.) and allow the user to select the states from the predefined list. Likewise, interface component 406 can present a list of common state transitions and allow the user to associate selected state transitions with the states. Interface component 406 can also allow the user to create user-defined states for inclusion in the state machine. In another example, interface component 406 may provide a graphical development environment that allows the user to build a desired state machine by interacting with graphical icons (*e.g.,* state bubbles, transition arrows, *etc*.) in a drag-and-drop manner.

In addition to the state and state transition definitions, configuration data 404 can include group definitions and definitions for role-specific levels. As will be described in more detail below, group definitions can allow state machines to be defined completely or in part within other state machines, providing a means to create more intricate state machines suitable for control of complex processes. The role-specific levels can allow multiple different state machines to be created for a given automation system, where each state machine is associated with a particular user role (*e.g.,* operator, maintenance, engineer, administrator, *etc*.). By allowing creation of role-specific state machines, state machine configurator 402 can generate state machine control instructions that vary machine behavior based on a role of the user interacting with the system, as will be explained further below.

Some embodiments of state machine configurator 402 can include a simulation component 408. Once the state machine configuration data 404 has been entered and a state machine defining the desired machine behavior has been specified, simulation component 408 can verify proper operation of the state machine prior to compiling. For example, simulation component 408 may debug the proposed state machine by examining the defined states and transitions to ensure that there are no contradictory transition definitions in the state machine design. Simulation component 408 may also display a testing interface that renders an animated graphical representation of the state machine diagram. The testing interface can allow the user to manually enter test inputs and observe the state transitions on the animated state machine representation. In this way, the user can ensure that the pending state machine design will enforce proper state transitions in response to expected system events.

After the configuration data 404 has been entered and, optionally, tested by the simulation component 408, instruction generation component 410 can compile the configuration data to yield a state machine instruction 414. State machine instruction 414 can be executed by an industrial controller to enforce the state machine behavior defined by the configuration data 404. Accordingly, state machine instruction 414 can be imported (*e.g.,* by import component 416) into a controller program 418 for execution by a controller. For example, controller program 418 may be a ladder logic program comprising code sections that control respective aspects of an industrial process. The state machine instruction 414 can be imported into controller program 418 and added to a rung of the ladder logic in order to enforce correct state transition behavior of the process. The user may, for example, define which portions of the ladder logic code control the "running" state of the process, which controller address indicates that the "complete" event has occurred, which controller address corresponds to the "starting" state, *etc*. These definitions can be specified in the configuration data 404 or, in some embodiments, may be defined using fields accessible through interaction with the state machine instruction 414. During execution, the state machine instruction 414 can supervise execution of the ladder logic to enforce adherence to the defined state machine.

In another example, the state machine instruction 414 can be executed in conjunction with a sequence manager that defines equipment actions and sequences for making a product by a particular process. In this scenario, the sequence manager can reference the state machine instruction 414 to determine the current state of the process and determine the next required state given current conditions. The sequence manager can then run the set of instructions corresponding to the next state indicated by the state machine instruction 414, and provide feedback to the state machine instruction 414 when the transition to the next step is complete. In this way, the state machine instruction 414 supervises the steps executed by the sequence manager to ensure that the process adheres to the defined state machine behavior.

Advantageously, the state machine instruction can be protected within the controller program 418 so that the state machine cannot be circumvented or modified, ensuring that the controlled process complies with the desired state machine behavior. In this way, modifications to the control program after deployment will not cause the controlled process to deviate from the state machine behavior enforced by the state machine instruction 414. For example, addition of a new piece of equipment to a stage of the automation system may require maintenance personnel to add to or alter a portion of the controller program 418 that controls the "running" state of the process. If the desired state machine behavior had been encoded entirely with controller code (*e.g.,* ladder logic), there is a possibility that the modifications would inadvertently alter the state machine behavior. However, with the state machine instruction 414 in place, the desired state machine behavior is fixed and cannot be circumvented by changes to the controller logic.

In one or more embodiments, state machine configurator 402 can also include a faceplate generation component 412, which can be configured to generate a graphical representation 422 of the state machine based on the configuration data 404 provided by the user. The graphical representation 422 can comprise an animated graphic representing the state machine that can display live state information for the running system based on data read from the state machine instruction 414. In an exemplary scenario, the graphical representation 422 can be invoked in a runtime viewing environment through interaction with the state machine instruction 414. In another example, the graphical representation 422 can comprise a faceplate graphic that can be imported into an operator interface application 420 (*e.g.,* a human-machine interface) that renders data generated by the industrial controller.

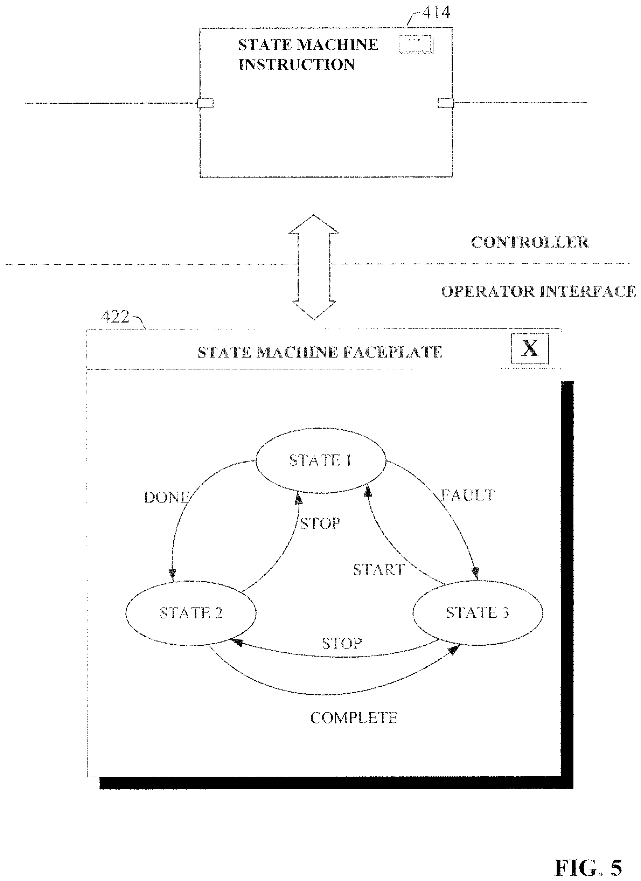

FIG. 5 illustrates communication between the graphical representation 422 and the state machine instruction 414. As depicted in FIG. 5, state machine instruction 414 executes in an industrial controller as part of an industrial control program, while the graphical representation 422 (in the form of a state machine faceplate) resides in an operator interface. The graphical representation 422 can be invoked on the operator interface as a faceplate graphic. During runtime, the graphical representation 422 can display state information generated by the state machine instruction 414 to convey the current state of the automated system. In a non-limiting example, the graphical representation 422 can comprise a state machine diagram (*e.g.,* a bubble-and-arrow diagram) with color-change animations for the state bubbles and transition arrows to indicate the current state of the process.

The state machine configurator provides a development platform for defining customized state machines and compiling those state machines into an executable instruction that can be deployed in a controller, thereby abstracting the system designer from the specifics of the controller code (*e.g*., ladder logic programming) and simplifying development. Moreover, the resulting state machine instruction can enforce the desired state machine behavior even if the controller program itself is modified after deployment.

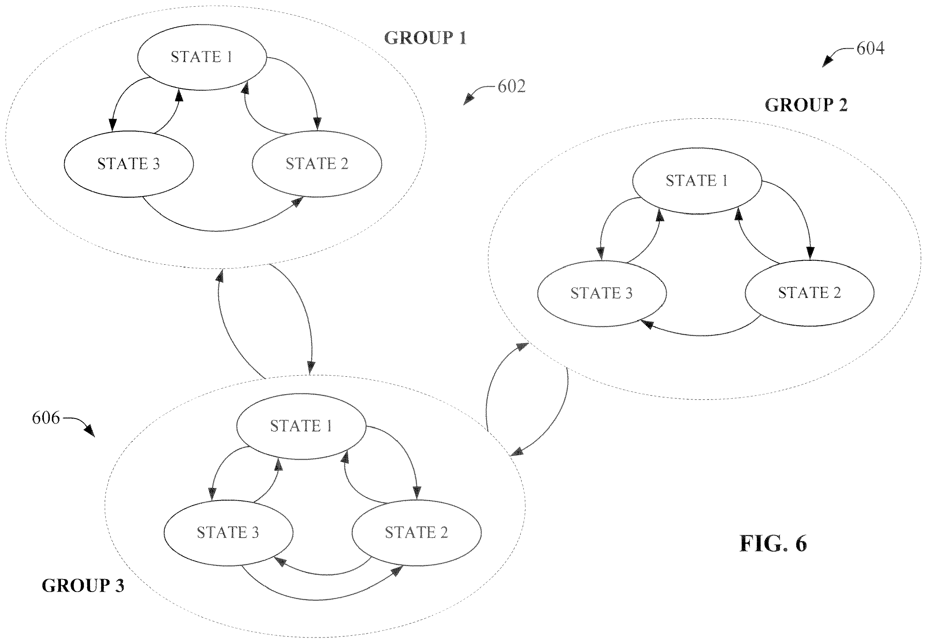

As noted above, one or more embodiments of the state machine configurator can support group definitions that allow state machines or portions of state machines to be configured within other state machines. FIG. 6 illustrates an example state machine that comprises multiple groups. In this example, the state machine comprises three groups - 602, 604, and 606 - and each group is assigned a name (Group 1, Group 2, and Group 3). The state machine configurator can allow multiple groups to be defined, and command sets to be associated with the respective groups. In one or more embodiments, the user can pre-configure group behavior via the state machine configurator. In a non-limiting example, the state machine configurator can allow the user to define, for a given group, an initial state designated to be executed the first time that the group is encountered. The state machine configurator can also allow the user specify how to determine which state should be executed within the group when the process returns to the group after the initial encounter. For example, the user may set a configuration option identifying a state within the group that should be executed each time the group is encountered (*e.g.,* a fixed state). Alternatively, the user may specify that, when the group is called, the system should execute the last state that was executed during the previous transition to the group. The user may also define a criterion for determining the state within the group that should be executed upon transition to the group, where the criterion is based on the last executed state.

For example, the user may define that, in response to a particular command being received while the process is in a particular state of Group 1, the process is to transition to Group 3. The user can further define, via the state machine configurator, which state within Group 3 the process should transition to given these conditions. The target state within Group 3 can be defined explicitly (*e.g.,* fixed state), or can be defined based on previously executed steps. For example, the user may define that the target state in Group 3 should be the most recently executed state of Group 3, or should be determined based on which states were executed during the previous transition to Group 3. In another example, the user may define a default initial state for Group 3, and specify that, when a particular command is received while the process is in a particular state of Group 1, the process is to transition to the initial state of Group 3. By allowing a user to define state machine groups and the interactions between those groups, the state machine configurator can facilitate creation of embedded or nested state machines, which can then be compiled by the instruction generation component 410 into a state machine instruction 414 for execution in a controller.

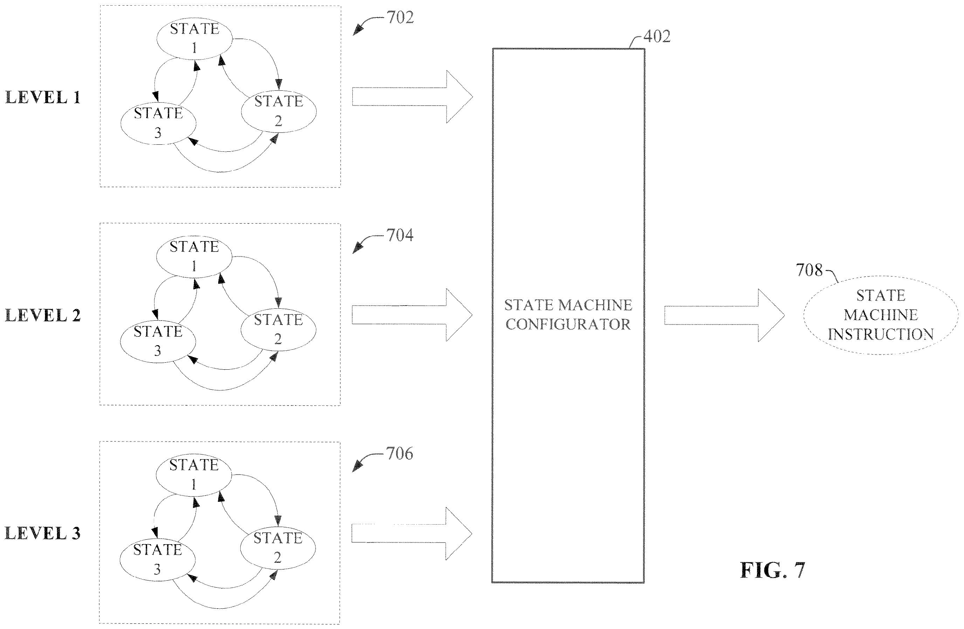

In one or more embodiments, the state machine configurator can also support creation of multiple role-specific levels, allowing multiple role-specific state machines to be created for a given process. FIG. 7 illustrates configuration of such role-specific levels. In this example, three different levels (Levels 1-3) have been defined in the state machine configurator, and a state machine has been defined for each level. Once the levels have been created, the state machine configurator allows one or more user roles to be associated with each level, thereby associating a particular system behavior (as represented by the state machines defined for each level) with a user role. Implementing these role-specific state machines in the controller can vary machine behavior as a function of the role of the user who is interacting with the system. For example, Level 1 may be associated with a line operator role. Accordingly, state machine 702 - associated with Level 1 - defines the allowable states and transitions to be enforced when a line operator is interacting with the system. Likewise, Levels 2 and 3 may be associated with a maintenance role and a management role, respectively, and state machines 704 and 706 define the respective system behaviors to be enforced when users of those roles are interacting with the system.

Once the levels and their associated state machines have been defined, and the user roles have been associated with their respective levels, the state machine configurator 402 can compile the state machine information to yield state machine instruction 708 (similar to previous examples), which can be executed in the industrial controller to enforce the defined role-specific machine behaviors. The role of the user can be determined, for example, by a log-in identity that the user must provide before being given access to the system. Upon successful user log-in, the state machine instruction 708 can compare the role associated with the log-in identity with the roles associated with the defined levels, and implement the role-specific state machine corresponding to the log-in role.

In an example scenario, role-specific state machines may be beneficial if maintenance personnel require a machine to enter a particular "Idle" state (*e.g.,* "Maintenance Idle") in order to perform a certain maintenance function or part replacement. This "Maintenance Idle" state (and the transition events leading to this state) may differ from the "Idle" state entered during normal operation, and thus require different state machine transitions than those that drive normal machine operation. In another example, a system designer may wish to prohibit certain machine states unless the user is an operator or maintenance person. Accordingly, the designer can define a level in the state machine configurator 402 having a state machine that prevents transition to the prohibited machine states, and assign all non-operator and non-maintenance roles to that level.

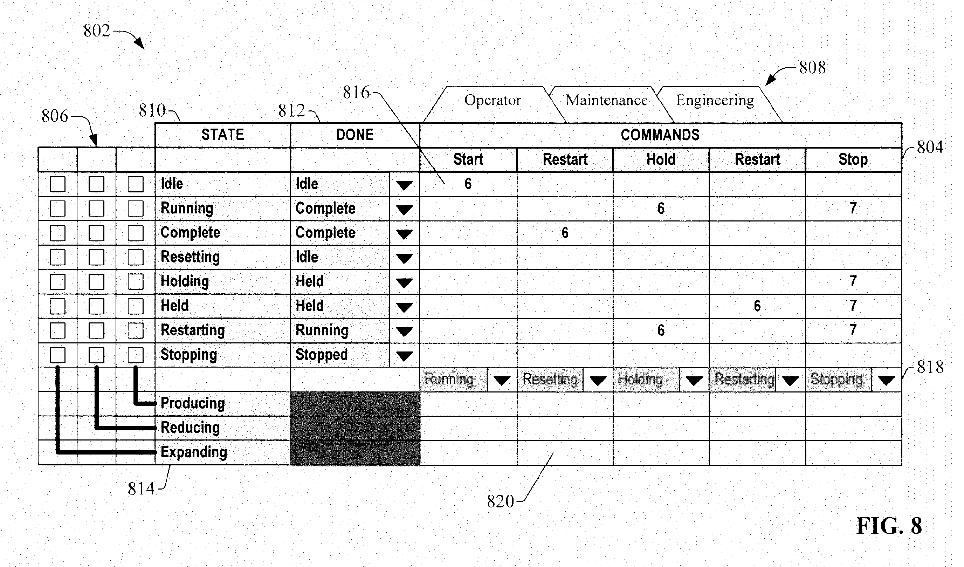

FIG. 8 illustrates an exemplary, non-limiting state machine configurator interface 802 that can be used to develop customized state machines. This interface is only intended to be exemplary, and it is to be appreciated that any suitable interface for developing custom state machines are within the scope of this disclosure.

Exemplary interface 802 displays selectable transition commands in a transition command row 804, and a list of available states in a state column 810. Each of the available states configured in state column 810 has an associated "Done" state selected in an adjacent done column 8 12. The "Done" state for a given present state in column 810 represents the state to which the present state will transition when the present state has completed. In exemplary interface 802, the "Done" state for each of the available states listed in column 810 can be selected using a drop-down selection field, which is populated by the available states listed in column 810 to ensure internal state machine consistency. In the example configuration illustrated in FIG. 8, the "Idle," "Complete," and "Held" states are not associated with a "done" condition, since these states are maintained until a new transition command is received. The "Done" states for these states have therefore been set in column 812 to be the same as the corresponding states in column 810. The remaining states in column 810 (*e.g.,* "Running," Resetting," *etc*.) have associated completion events that cause a transition to a "done" state (*e.g.,* completion of the "Running" state causes the state machine to transition to the "Complete" state).

Exemplary interface 802 includes a transition priority matrix 816 that allows the user to select, for each state in column 810, which of the commands in row 804 will trigger a transition from that state to a destination state associated with the command(s). The destination states respectively associated with each of the commands in row 804 are selectable in the destination state row 818 using drop-down window selection. To ensure internal state consistency, each of the drop-down windows in the destination state row 818 is populated with the states configured in column 810.

To associate a command in row 804 with a state in column 810, the user can enter a priority number in the field of the transition priority matrix 816 that is common to the command and the state. For example, in the first row of the transition priority matrix 816, a "6" has been entered in the first field, which associates the "Start" command in row 804 with the "Idle" state in column 810. Moreover, the "Running" state has been selected in row 818 as the destination state for the "Start" command. In the resulting state machine, if the system receives the "Start" command (set in row 804) while the process is in the "Idle" state (set in column 810), the process will transition to the "Running" state (set in row 818).

The exemplary state machine configuration interface 802 allows multiple commands to be associated with a particular state. For instance, in the illustrated example, the "Held" state in column 810 is associated with both the "Restart" and "Stop" commands, since priority values have been entered in the fields associated with these commands. Thus, the resulting state machine instruction will control the process such that, if the process is in the "Held" state, receipt of the "Restart" command will cause the process to transition to the "Restarting" state (row 818), while receipt of the "Stop" command will cause the process to transition to the "Stopping" state. The relative priority values entered in the fields for a given state determine which command will be given priority if two or more enabled commands are received simultaneously. In the present example, if the "Restart" command (priority value 6) and the "Stop" command (priority value 7) are received simultaneously while the system is in the "Held" state, the "Stop" command will be given priority by virtue of its greater priority value, and the system will transition to the "Stopping" state accordingly.

Group section 814 allows the user to enter and configure groups (as discussed above in connection with FIG. 6). In the illustrated example, three groups - named Producing, Reducing, and Expanding - have been entered. Checkboxes 806 are used to select which states from column 810 will be included in each group. In one or more embodiments, groups can also be checked to be included in a given state (not shown in the FIG. 8). Each state in column 810 includes a checkbox for each defined group, allowing a given state to be included in multiple groups if desired. Additional configuration screens and/or windows (not shown) can facilitate entry of group configuration data that specifies initial states and tracking behavior (*e.g*., identify an initial state within the group to which the process will transition when the group is first encountered, specify that subsequent calls to the group are to transition to a last state within the group, specify criteria for determining which state within the group should be entered based on the last executed state, *etc*.). In the illustrated example, priority values entered for a group in the group transition priority matrix 820 will be applied to all states in the group (*e.g.,* entering a priority of "6" for the "Start" command in the row corresponding to the "Producing" group will apply priority "6" to the "Start" command regardless of the current state of the Producing group). However, in some embodiments the state machine configuration interface can allow priority values to be assigned individually to different states within the group, similar to transition priority matrix 816.

As noted above, multiple role-specific levels can be defined for a given industrial process or system, and different state machines can be associated with the respective levels. Accordingly, interface 802 can include tabs 808 for each defined role-specific level. Selection of a tab will display the state machine configuration information for the role corresponding to the selected tab, and allow the configuration for the selected role to be edited or modified. In this way, interface 802 provides an intuitive interface for configuring multiple role-specific state machines for a given industrial process, which can then be compiled into a state machine instruction that enforces the defined role-specific machine behaviors.

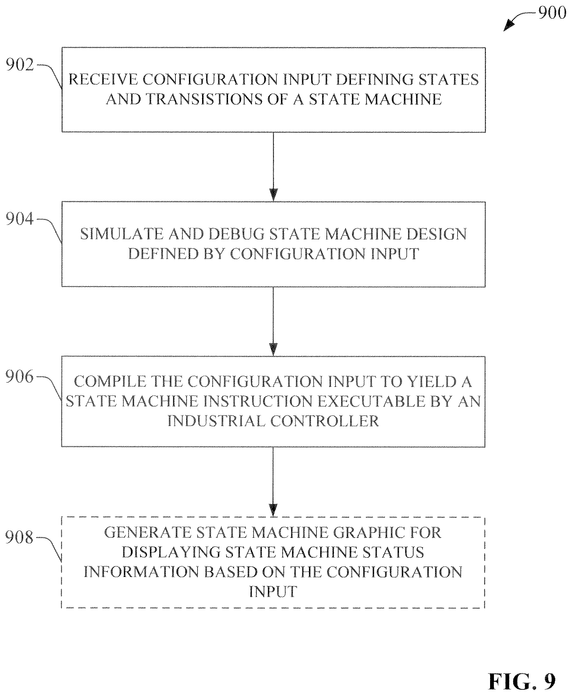

FIGs 9-11 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 9 illustrates an example methodology 900 for creating executable state machines for control of an industrial process. Initially at 902, configuration input defining states and transitions of a state machine are received. This configuration input can comprise the state and transition event definitions for a custom state machine designed to control an industrial process or automation system. The configuration input may also define multiple state machines, assign each state machine to a group, and define state transition interactions between the groups, thereby specifying nested state machines within other state machines. The configuration input may also define multiple role-specific state machines, including assignment of certain user roles to each role-specific state machine.

At 904, the state machine defined by the configuration input received at step 902 is simulated and debugged. This can include, for example, receiving manual test commands and displaying the simulated state machine response to the commands. By simulating the state machine prior to compiling, the developer can ensure that the state machine design will transition to the correct states in response to expected system conditions.

At 906, the configuration input received at step 902 is compiled into a state machine instruction that is executable by an industrial controller. The state machine instruction can ensure that the controlled process adheres to the custom state machine behavior defined at step 902. To prevent circumvention or alteration of the defined machine state behavior, the state machine instruction can be secured within the controller to prevent online editing of the state machine. Optionally, at step 908, a state machine graphic can be generated to display state machine status information for the controlled process. The graphic can be generated based on the state machine definition information received at step 902, and can comprise, for example, a color-animated bubble-and-arrow state machine representation depicting the states and transition events defined at step 902.

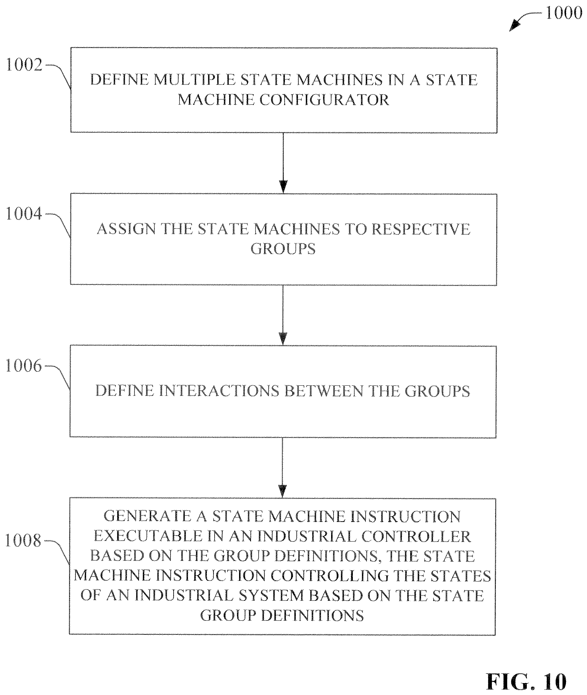

FIG. 10 illustrates an example methodology 1000 for defining state machine groups in a state machine configurator. Initially, at 1002, multiple state machines for controlling an industrial process or automation system are defined in a state machine configurator (*e.g.,* state machine configurator 402 of FIG. 4). At 1004, the state machines defined at step 1002 are assigned to respective groups. At 1006, interactions between the groups are defined. For example, a developer may define that, if a certain transition event is received while the industrial process is in a particular state of a first group, the system is to transition to the second group. Configuration of this interaction may include specifying a target state within the second group, instructing that the process is to transition to a most recent state of the second group, instructing that the process is to transition to a default initial state of the second group, or defining other such criteria for determining a target state within the second group. At 1008, a state machine instruction is generated based on the configuration information received at steps 1002-1006. The resulting state machine instruction can be executed by an industrial controller to facilitate control of the industrial process or automation system in accordance with the defined state machines and groups.

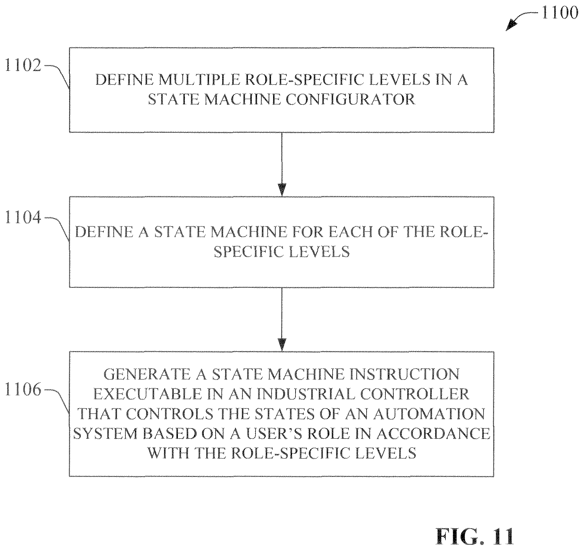

FIG. 11 illustrates an example methodology 1100 for implementing role-specific state machines for controlling an industrial process or automation system. Initially, at 1102, multiple role-specific levels are defined in a state machine configurator. At 1104, a state machine is defined for each of the role-specific levels defined at step 1102. At 1106, a state machine instruction is generated that can be executed in an industrial controller to facilitate role-specific control of the industrial process or automation system in accordance with the role-specific state machines.

Embodiments, systems, and components described herein, as well as industrial control systems and industrial automation environments in which various aspects set forth in the subject specification can be carried out, can include computer or network components such as servers, clients, programmable logic controllers (PLCs), automation controllers, communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as I/O modules including analog, digital, programmed/intelligent I/O modules, other programmable controllers, communications modules, sensors, actuators, output devices, and the like.

The network can include public networks such as the Internet, intranets, and automation networks such as control and information protocol (CIP) networks including DeviceNet, ControlNet, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, Local Area Networks (LANs), Wide Area Networks (WANs), proxies, gateways, routers, firewalls, virtual private network (VPN) devices, servers, clients, computers, configuration tools, monitoring tools, and/or other devices.

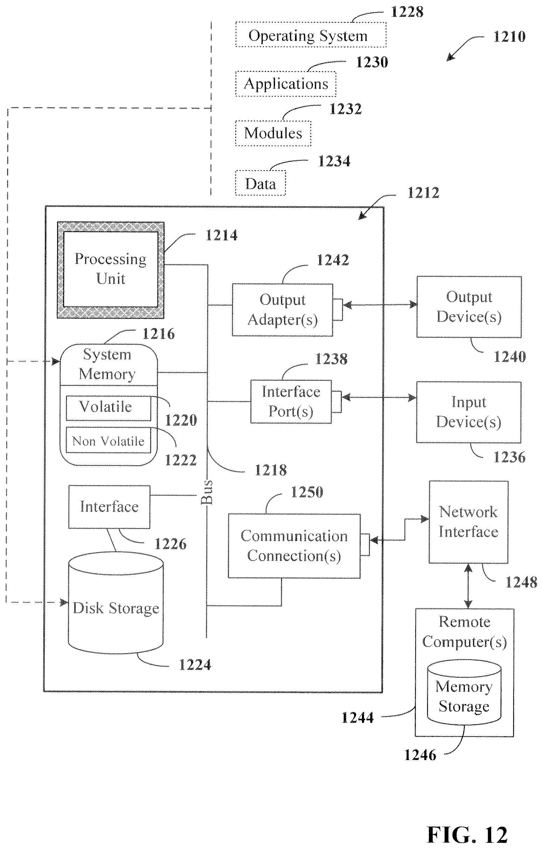

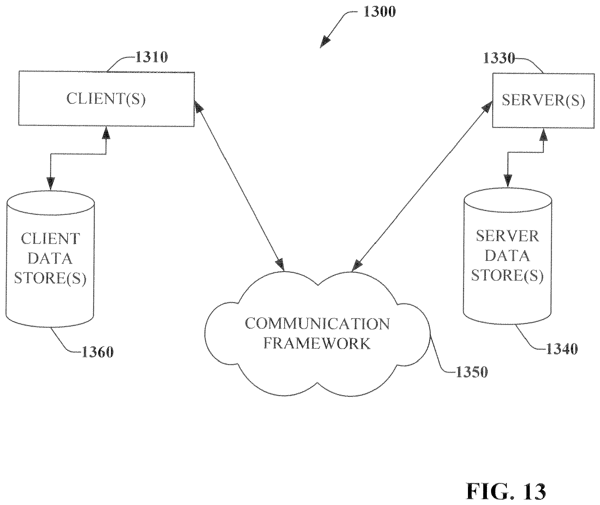

In order to provide a context for the various aspects of the disclosed subject matter, FIGs. 12 and 13 as well as the following discussion are intended to provide a brief, general description of a suitable environment in which the various aspects of the disclosed subject matter may be implemented.

With reference to FIG. 12, an example environment 1210 for implementing various aspects of the aforementioned subject matter includes a computer 1212. The computer 1212 includes a processing unit 1214, a system memory 1216, and a system bus 1218. The system bus 1218 couples system components including, but not limited to, the system memory 1216 to the processing unit 1214. The processing unit 1214 can be any of various available processors. Multi-core microprocessors and other multiprocessor architectures also can be employed as the processing unit 1214.

The system bus 1218 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MCA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1216 includes volatile memory 1220 and nonvolatile memory 1222. The basic input/output system (BIOS), containing the basic routines to transfer information between elements within the computer 1212, such as during start-up, is stored in nonvolatile memory 1222. By way of illustration, and not limitation, nonvolatile memory 1222 can include read only memory (ROM), programmable ROM (PROM), electrically programmable ROM (EPROM), electrically erasable PROM (EEPROM), or flash memory. Volatile memory 1220 includes random access memory (RAM), which acts as external cache memory. By way of illustration and not limitation, RAM is available in many forms such as synchronous RAM, static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1212 also includes removable/non-removable, volatile/nonvolatile computer storage media. FIG. 12 illustrates, for example a disk storage 1224. Disk storage 1224 includes, but is not limited to, devices like a magnetic disk drive, floppy disk drive, tape drive, Jaz drive, Zip drive, LS-100 drive, flash memory card, or memory stick. In addition, disk storage 1224 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1224 to the system bus 1218, a removable or non-removable interface is typically used such as interface 1226.

It is to be appreciated that FIG. 12 describes software that acts as an intermediary between users and the basic computer resources described in suitable operating environment 1210. Such software includes an operating system 1228. Operating system 1228, which can be stored on disk storage 1224, acts to control and allocate resources of the computer 1212. System applications 1230 take advantage of the management of resources by operating system 1228 through program modules 1232 and program data 1234 stored either in system memory 1216 or on disk storage 1224. It is to be appreciated that one or more embodiments of the subject disclosure can be implemented with various operating systems or combinations of operating systems.

A user enters commands or information into the computer 1212 through input device(s) 1236. Input devices 1236 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1214 through the system bus 1218 *via* interface port(s) 1238. Interface port(s) 1238 include, for example, a serial port, a parallel port, a game port, and a universal serial bus (USB). Output device(s) 1240 use some of the same type of ports as input device(s) 1236. Thus, for example, a USB port may be used to provide input to computer 1212, and to output information from computer 1212 to an output device 1240. Output adapter 1242 is provided to illustrate that there are some output devices 1240 like monitors, speakers, and printers, among other output devices 1240, which require special adapters. The output adapters 1242 include, by way of illustration and not limitation, video and sound cards that provide a means of connection between the output device 1240 and the system bus 1218. It should be noted that other devices and/or systems of devices provide both input and output capabilities such as remote computer(s) 1244.

Computer 1212 can operate in a networked environment using logical connections to one or more remote computers, such as remote computer(s) 1244. The remote computer(s) 1244 can be a personal computer, a server, a router, a network PC, a workstation, a microprocessor based appliance, a peer device or other common network node and the like, and typically includes many or all of the elements described relative to computer 1212. For purposes of brevity, only a memory storage device 1246 is illustrated with remote computer(s) 1244. Remote computer(s) 1244 is logically connected to computer 1212 through a network interface 1248 and then physically connected *via* communication connection 1250. Network interface 1248 encompasses communication networks such as local-area networks (LAN) and wide-area networks (WAN). LAN technologies include Fiber Distributed Data Interface (FDDI), Copper Distributed Data Interface (CDDI). Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1250 refers to the hardware/software employed to connect the network interface 1248 to the system bus 1218. While communication connection 1250 is shown for illustrative clarity inside computer 1212, it can also be external to computer 1212. The hardware/software necessary for connection to the network interface 1248 includes, for exemplary purposes only, internal and external technologies such as, modems including regular telephone grade modems, cable modems and DSL modems, ISDN adapters, and Ethernet cards.

FIG. 13 is a schematic block diagram of a sample computing environment 1300 with which the disclosed subject matter can interact. The sample computing environment 1300 includes one or more client(s) 1310. The client(s) 1310 can be hardware and/or software (*e.g.,* threads, processes, computing devices). The sample computing environment 1300 also includes one or more server(s) 1330. The server(s) 1330 can also be hardware and/or software (*e.g.,* threads, processes, computing devices). The servers 1330 can house threads to perform transformations by employing one or more embodiments as described herein, for example. One possible communication between a client 1310 and a server 1330 can be in the form of a data packet adapted to be transmitted between two or more computer processes. The sample computing environment 1300 includes a communication framework 1350 that can be employed to facilitate communications between the client(s) 1310 and the server(s) 1330. The client(s) 1310 are operably connected to one or more client data store(s) 1360 that can be employed to store information local to the client(s) 1310. Similarly, the server(s) 1330 are operably connected to one or more server data store(s) 1340 that can be employed to store information local to the servers 1330.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g.,* a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g.,* hard disk, floppy disk, magnetic strips...), optical disks [*e.g*., compact disk (CD), digital versatile disk (DVD)...], smart cards, and flash memory devices (*e.g.,* card, stick, key drive...).

### The following is a list of examples of the invention:

Example 1. A state machine configurator that facilitates state machine control in an industrial automation system, comprising:
   an interface component configured to receive configuration data that defines a state machine, wherein the interface component is further configured to provide an interface for specifying available states and transitions of the state machine, wherein the interface displays selectable transition commands in a transition command row, and the states in a state column of a transition priority matrix, the transition priority matrix allowing a user to select, for each state of the state column, which of the transition commands in a transition command row will trigger a transition from a state in the state column to a destination state associated with the transition command, by entering priority values in fields of the transition priority matrix, wherein priority values entered in the fields of the transition priority matrix for a state of the state column determine which command will be given priority if two or more enabled commands are received simultaneously; and
   an instruction generation component configured to compile the configuration data to yield a state machine instruction that, in response to execution by a controller, facilitates control of the industrial automation system in accordance with the state machine.
Example 2. The state machine configurator of example 1, further comprising a simulation component configured to at least one of simulate or debug the state machine defined by the configuration data.
Example 3. The state machine configurator of example 1, further comprising an import component configured to import the state machine instruction into an industrial control program.
Example 4. The state machine configurator of example 1, further comprising a faceplate generation component configured to generate a graphical representation of the state machine based on the configuration data.
Example 5. The state machine configurator of example 4, wherein the graphical representation is configured to execute in an operator interface application and render status information read from the state machine instruction.
Example 6. The state machine configurator of example 1, wherein the configuration data defines multiple state machines associated with respective groups and one or more interactions between the groups.
Example 7. The state machine configurator of example 7, wherein the configuration data comprises an instruction to, in response to a defined transition event, transition to a specified state of a specified one of the groups, wherein the specified state comprises at least one of a defined initial state, a most recent state, or a state following the most recent state.
Example 8. The state machine configurator of example 1, wherein the configuration data defines multiple state machines respectively associated with a role-specific level, and the state machine instruction, in response to the execution by the controller, selects one of the multiple state machines for control of the industrial system based on a determined role.
Example 9. The state machine configurator of example 1, wherein the state machine instruction comprises at least one of a ladder logic instruction, a sequential function chart instruction, or a text-based instruction.
Example 10. The state machine configurator of example 1, wherein the state machine instruction is configured to, in response to the execution by the controller, control execution of a controller program in accordance with the state machine defined by the configuration data.
Example 11. A method for implementing state machine control of an industrial process, comprising:
   receiving configuration data that describes a state machine, comprising providing an interface for specifying available states and transitions of the state machine, wherein the interface displays selectable transition commands in a transition command row, and the states in a state column of a transition priority matrix, the transition priority matrix allowing a user to select, for each state of the state column, which of the transition commands in a transition command row will trigger a transition from a state in the state column to a destination state associated with the transition command, by entering priority values in fields of the transition priority matrix, wherein priority values entered in the fields of the transition priority matrix for a state of the state column determine which command will be given priority if two or more enabled commands are received simultaneously; and
   compiling the configuration data to generate a state machine instruction configured to execute in an industrial controller to facilitate control of the industrial process based on the state machine.
Example 12. The method of example 11, further comprising importing the state machine instruction into an industrial control program for execution by the industrial controller.
Example 13. The method of example 11, further comprising generating, based on the configuration data, a graphical interface component that displays state information generated by the state machine instruction.
Example 14. The method of example 11, further comprising:
   defining, based on the configuration data, multiple state machines;
   assigning, based on the configuration data, the multiple state machines to respective groups; and
   defining, based on the configuration data, at least one state transition between the groups.
Example 15. The method of example 14, wherein the defining the at least one state transition comprises defining, based on the configuration data, a transition to at least one of a default state of a specified group, a most recent state of the specified group, or a state following the most recent state of the specified group.
Example 16. The method of example 11, further comprising:
   defining, based on the configuration data, multiple state machines; and
   assigning, based on the configuration data, the multiple state machines to respective role-specific levels.
Example 17. The method of example 16, wherein the compiling comprises generating the state machine instruction to cause in the industrial controller to select one of the multiple state machines for control of the industrial process based on a determined role.
Example 18. The method of example 11, further comprising executing the state machine instruction in at least one of a ladder logic program, a sequential function chart program, or a structured text program.
Example 19. A computer-readable medium having stored thereon computer-executable instructions that, in response to execution, cause a computing system to perform operations, the operations including:
   receiving configuration information that defines a state machine; and
   compiling the configuration information to yield a state machine instruction that is executable in an industrial control program to facilitate control of an industrial process in accordance with the state machine.
Example 20. The computer-readable medium of example 19, wherein the receiving the configuration information comprises receiving state information defining states comprising the state machine and transition information defining transition events between the states.

## Claims

1. A state machine configurator (302; 402) that facilitates state machine control in an industrial automation system, comprising:
an interface component (304; 406) configured to receive configuration data (404) that defines a state machine (200; 702, 704, 706),
**characterized in that** the interface component (304; 406) is further configured to provide an interface (802) for specifying available states and transitions of the state machine, wherein the interface (802) displays selectable transition commands in a transition command row (804), and the states in a state column (810) of a transition priority matrix (816), the transition priority matrix (816) allowing a user to select, for each state of the state column (810), which of the transition commands in a transition command row (804) will trigger a transition from a state in the state column to a destination state associated with the transition command, by entering priority values in fields of the transition priority matrix (816), wherein priority values entered in the fields of the transition priority matrix (816) for a state of the state column determine which command will be given priority if two or more enabled commands are received simultaneously; and
an instruction generation component (306; 410) configured to compile the configuration data (404) to yield a state machine instruction that, in response to execution by a controller, facilitates control of the industrial automation system in accordance with the state machine.

2. The state machine configurator (302; 402) of claim 1, further comprising a simulation component (308; 408) configured to at least one of simulate or debug the state machine defined by the configuration data (404).

3. The state machine configurator (302; 402) of claim 1 or 2, further comprising an import component (310; 416) configured to import the state machine instruction into an industrial control program.

4. The state machine configurator (302; 402) of any one of claims 1 to 3, further comprising a faceplate generation component (312; 412) configured to generate a graphical representation of the state machine based on the configuration data (404), and/or wherein the graphical representation is configured to execute in an operator interface application and render status information read from the state machine instruction.

5. The state machine configurator (302; 402) of any one of claims 1 to 4, wherein the configuration data defines multiple state machines associated with respective groups and one or more interactions between the groups, and/or
wherein the configuration data comprises an instruction to, in response to a defined transition event, transition to a specified state of a specified one of the groups, wherein the specified state comprises at least one of a defined initial state, a most recent state, or a state following the most recent state.

6. The state machine configurator (302; 402) of any one of claims 1 to 5, wherein the configuration data (404) defines multiple state machines respectively associated with a role-specific level, and the state machine instruction, in response to the execution by the controller, selects one of the multiple state machines for control of the industrial system based on a determined role, or
wherein the state machine instruction comprises at least one of a ladder logic instruction, a sequential function chart instruction, or a text-based instruction.

7. The state machine configurator (302; 402) of any one of claims 1 to 6, wherein the state machine instruction is configured to, in response to the execution by the controller, control execution of a controller program in accordance with the state machine defined by the configuration data (404).

8. A method for implementing state machine control of an industrial process, comprising:
receiving (902) configuration data (404) that describes a state machine (200; 702, 704, 706), comprising providing an interface (802) for specifying available states and transitions of the state machine, wherein the interface (802) displays selectable transition commands in a transition command row (804), and the states in a state column (810) of a transition priority matrix (816), the transition priority matrix (816) allowing a user to select, for each state of the state column (810), which of the transition commands in a transition command row (804) will trigger a transition from a state in the state column to a destination state associated with the transition command, by entering priority values in fields of the transition priority matrix (816), wherein priority values entered in the fields of the transition priority matrix (816) for a state of the state column determine which command will be given priority if two or more enabled commands are received simultaneously; and
compiling (906) the configuration data (404) to generate a state machine instruction configured to execute in an industrial controller to facilitate control of the industrial process based on the state machine (200; 702, 704, 706).

9. The method of claim 8, further comprising importing the state machine instruction into an industrial control program for execution by the industrial controller.

10. The method of claim 8 or 9, further comprising generating, based on the configuration data (404), a graphical interface component that displays state information generated by the state machine instruction.

11. The method of any one of claims 8 to 10, further comprising:
defining, based on the configuration data, multiple state machines;
assigning, based on the configuration data, the multiple state machines to respective groups; and
defining, based on the configuration data, at least one state transition between the groups, and/or
wherein the defining the at least one state transition comprises defining, based on the configuration data, a transition to at least one of a default state of a specified group, a most recent state of the specified group, or a state following the most recent state of the specified group.

12. The method of any one of claims 8 to 11, further comprising:
defining, based on the configuration data (404), multiple state machines; and
assigning, based on the configuration data (404), the multiple state machines to respective role-specific levels, and/or
wherein the compiling comprises generating the state machine instruction to cause in the industrial controller to select one of the multiple state machines for control of the industrial process based on a determined role.

13. The method of any one of claims 8 to 12, further comprising executing the state machine instruction in at least one of a ladder logic program, a sequential function chart program, or a structured text program.

14. A computer-readable medium having stored thereon computer-executable instructions that, in response to execution, cause a computing system to perform the method of one of claims 8 to 13.

## Patentansprüche

1. Zustandsmaschinenkonfigurator (302; 402), der eine Steuerung einer Zustandsmaschine in einem industriellen Automatisierungssystem ermöglicht, mit:
einer Schnittstellenkomponente (304; 406), die ausgebildet ist, Konfigurationsdaten (404), die eine Zustandsmaschine (200; 702, 704, 706) definieren, zu empfangen,
**dadurch gekennzeichnet, dass**
die Schnittstellenkomponente (304; 406) ferner ausgebildet ist, eine Schnittstelle (802) zum Spezifizieren verfügbarer Zustände und Übergänge der Zustandsmaschine bereitzustellen, wobei die Schnittstelle (802) auswählbare Übergangsbefehle in einer Übergangsbefehlsreihe (804) und die Zustände in einer Zustandsspalte (810) einer Übergangsprioritätsmatrix (816) anzeigt, die es einem Benutzer ermöglicht, für jeden Zustand der Zustandsspalte (810), auszuwählen, welcher der Übergangsbefehle in einer Übergangsbefehlsreihe (804) einen Übergang von einem Zustand in der Zustandsspalte in einen Zielzustand, der dem Übergangsbefehl zugeordnet ist, auslösen wird, indem Prioritätswerte in Felder der Übergangsprioritätsmatrix (816) eingegeben werden, wobei Prioritätswerte, die in die Felder der Übergangsprioritätsmatrix (816) für einen Zustand der Zustandsspalte eingegeben werden, Bestimmen, welcher Befehl Priorität erhält, wenn zwei oder mehrere aktivierte Befehle gleichzeitig empfangen werden; und
einer Befehlserzeugungskomponente (306; 410), die ausgebildet ist, die Konfigurationsdaten (404) zu kompilieren derart, dass ein Zustandsmaschinenbefehl erhalten wird, der in Reaktion auf die Ausführung durch eine Steuerung das Steuern des industriellen Automatisierungssystems gemäß der Zustandsmaschine ermöglicht.

2. Zustandsmaschinenkonfigurator (302; 402) nach Anspruch 1, der ferner eine Simulationskomponente (308; 408) aufweist, die ausgebildet ist, die durch die Konfigurationsdaten (404) definierte Zustandsmaschine zu simulieren und/oder daran eine Fehlerbehebung auszuführen.

3. Zustandsmaschinenkonfigurator (302; 402) nach Anspruch 1 oder 2, der ferner eine Importkomponente (310; 416) aufweist, die ausgebildet ist, den Zustandsmaschinenbefehl in ein Industriesteuerungsprogramm zu importieren.

4. Zustandsmaschinenkonfigurator (302; 402) nach einem der Ansprüche 1 bis 3, der ferner eine Frontansichtszeugungskomponente (312; 412) aufweist, die ausgebildet ist, eine grafische Darstellung der Zustandsmaschine auf der Grundlage der Konfigurationsdaten (404) zu erzeugen, und/oder
wobei die grafische Darstellung ausgebildet ist, in einer Bedienerschnittstellenanordnung ausgeführt zu werden und Statusinformation, die aus dem Zustandsmaschinenbefehl ausgelesen wird, als Bild darzustellen.

5. Zustandsmaschinenkonfigurator (302; 402) nach einem der Ansprüche 1 bis 4, wobei die Konfigurationsdaten mehrere, jeweiligen entsprechenden Gruppen zugeordnete Zustandsmaschinen und eine oder mehrere Interaktionen zwischen den Gruppen definieren, und/oder
wobei die Konfigurationsdaten einen Befehl umfassen, um in Reaktion auf ein definiertes Übergangsereignis in einen spezifizierten Zustand einer spezifizierten Gruppe überzugehen, wobei der spezifizierte Zustand einen definierten Anfangszustand und/oder einen jüngsten Zustand und/oder einen Zustand, der auf den jüngsten Zustand folgt, umfasst.

6. Zustandsmaschinenkonfigurator (302; 402) nach einem der Ansprüche 1 bis 5, wobei die Konfigurationsdaten (404) mehrere, entsprechend einer aufgabenspezifischen Ebene zugeordnete Zustandsmaschinen definieren, und der Zustandsmaschinenbefehl in Reaktion auf die Ausführung durch die Steuerung eine der mehreren Zustandsmaschinen zur Steuerung des industriellen Systems auf der Grundlage einer ermittelten Aufgabe auswählt, oder
wobei der Zustandsmaschinenbefehl einen Leiter-Logikbefehl und/oder einen Befehl eines sequentiellen Funktionsdiagramms und/oder einen textgestützten Befehl umfasst.

7. Zustandsmaschinenkonfigurator (302; 402) nach einem der Ansprüche 1 bis 6, wobei der Zustandsmaschinenbefehl ausgebildet ist, in Reaktion auf die Ausführung durch die Steuerung die Ausführung eines Steuerungsprogramms entsprechend der durch die Konfigurationsdaten (404) definierten Zustandsmaschine zu steuern.

8. Verfahren zur Implementierung einer Zustandsmaschinensteuerung eines Industriellen Prozesses, mit:
Empfangen (902) von Konfigurationsdaten (404), die eine Zustandsmaschine (200; 702, 704, 706) beschreiben, mit: Bereitstellen einer Schnittstelle (802) zum Spezifizieren verfügbarer Zustände und Übergänge der Zustandsmaschine, wobei die Schnittstelle (802) auswählbare Übergangsbefehle in einer Übergangsbefehlsreihe (804), und die Zustände in einer Zustandsspalte (810) einer Übergangsprioritätsmatrix (816) anzeigt, wobei die Übergangsprioritätsmatrix (816) einem Benutzer die Möglichkeit bietet, für jeden Zustand der Zustandsspalte (810) auszuwählen, welcher der Übergangsbefehle in einer Übergangsbefehlsreihe (804) einen Übergang von einem Zustand in der Zustandsspalte in einen Zielzustand, der dem Übergangsbefehl zugeordnet ist, auslösen wird, indem Prioritätswerte in Felder der Übergangsprioritätsmatrix (816) eingegeben werden, wobei Prioritätswerte, die in die Felder der Übergangsprioritätsmatrix (816) für einen Zustand der Zustandsspalte eingegeben werden, Bestimmen, welcher Befehl Priorität erhält, wenn zwei oder mehr aktivierte Befehle gleichzeitig empfangen werden; und
Kompilieren (906) der Konfigurationsdaten (404) zur Erzeugung eines Zustandsmaschinenbefehls, der geeignet ist, eine industrielle Steuerung zur Ermöglichung des Steuerns des industriellen Prozesses auf der Grundlage der Zustandsmaschine (200; 702, 704, 706) auszuführen.

9. Verfahren nach Anspruch 8, das ferner umfasst: Importieren des Zustandsmaschinenbefehls in ein industrielles Steuerprogramm zur Ausführung durch die industrielle Steuerung.

10. Verfahren nach Anspruch 8 oder 9, das ferner umfasst: Erzeugen einer grafischen Schnittstellenkomponente auf der Grundlage der Konfigurationsdaten (404), die Zustandsinformation anzeigt, die von dem Zustandsmaschinenbefehl erzeugt wird.

11. Verfahren nach einem der Ansprüche 8 bis 10, das ferner umfasst:
Definieren mehrerer Zustandsmaschinen auf der Grundlage der Konfigurationsdaten;
Zuweisen der mehreren Zustandsmaschinen zu entsprechenden Gruppen auf der Grundlage der Konfigurationsdaten; und
Definieren mindestens eines Zustandsübergangs zwischen den Gruppen auf der Grundlage der Konfigurationsdaten, und/oder
wobei das Definieren des mindestens einen Zustandsübergangs umfasst: Definieren eines Übergangs in einen Voreinstellungszustand einer spezifizierten Gruppe und/oder einen jüngsten Zustand der spezifizierten Gruppe und/oder einen Zustand, der auf den jüngsten Zustand der spezifizierten Gruppe folgt, auf der Grundlage der Konfigurationsdaten.

12. Verfahren nach einem der Ansprüche 8 bis 11, das ferner umfasst:
Definieren mehrerer Zustandsmaschinen auf der Grundlage der Konfigurationsdaten (404); und
Zuweisen der mehreren Zustandsmaschinen zu entsprechenden aufgabenspezifischen Ebenen auf der Grundlage der Konfigurationsdaten (404), und/oder
wobei das Kompilieren umfasst: Erzeugen des Zustandsmaschinenbefehls derart, dass in der industriellen Steuerung bewirkt wird, dass eine der mehreren Zustandsmaschinen zur Steuerung des industriellen Prozesses auf der Grundlage einer ermittelten Aufgabe ausgewählt wird.

13. Verfahren nach einem der Ansprüche 8 bis 12, das ferner umfasst: Ausführen des Zustandsmaschinenbefehls in einem Programm mit Leiterlogik und/oder einem Programm mit sequentiellen Funktionsdiagramm und/oder einem Programm mit strukturiertem Text.

14. Computerlesbares Medium mit darin gespeicherten computerausführbaren Befehlen, die bei Ausführung wirken, dass ein Rechensystem das Verfahren nach einem der Ansprüche 8 bis 13 ausführt.

## Revendications

1. Configurateur (302; 402) de machine à états, qui facilite la commande d'une machine à états dans un système d'automatisation industrielle, comprenant :
un composant d'interface (304; 406) configuré pour recevoir des données de configuration (404) qui définissent une machine à états (200; 702, 704, 706),
**caractérisé en ce que** le composant d'interface (304; 406) est en outre configuré pour fournir une interface (802) permettant de spécifier des états et des transitions disponibles de la machine à états,
dans lequel l'interface (802) affiche des commandes de transition sélectionnables dans une rangée de commandes de transition (804) et les états dans une colonne d'états (810) d'une matrice de priorité de transition (816), la matrice de priorité de transition (816) permettant à un utilisateur de sélectionner, pour chaque état de la colonne d'états (810), celle des commandes de transition d'une rangée de commandes de transition (804) qui va déclencher une transition d'un état de la colonne d'états vers un état de destination associé à la commande de transition, en entrant des valeurs de priorité dans des champs de la matrice de priorité de transition (816),
dans lequel les valeurs de priorité entrées dans les champs de la matrice de priorité de transition (816) pour un état de la colonne d'états déterminent à quelle commande la priorité sera donnée si au moins deux commandes activées sont reçues simultanément ; et
un composant de génération d'instruction (306; 410) configuré pour compiler les données de configuration (404) pour produire une instruction de machine à états qui, suite à son exécution par un contrôleur, facilite la commande du système d'automatisation industrielle selon la machine à états.

2. Configurateur (302; 402) de machine à états selon la revendication 1, comprenant en outre un composant de simulation (308; 408) configuré pour au moins simuler et/ou déboguer la machine à états définie par les données de configuration (404).

3. Configurateur (302; 402) de machine à états selon la revendication 1 ou 2, comprenant en outre un composant d'importation (310; 416) configuré pour importer l'instruction de machine à états dans un programme de commande industrielle.

4. Configurateur (302; 402) de machine à états selon l'une quelconque des revendications 1 à 3, comprenant en outre un composant de génération Faceplate (312; 412) configuré pour générer une représentation graphique de la machine à états en fonction des données de configuration (404), et/ou
dans lequel la représentation graphique est configurée pour s'exécuter dans une application d'interface opérateur et restituer des informations d'état lues à partir de l'instruction de machine à états.

5. Configurateur (302; 402) de machine à états selon l'une quelconque des revendications 1 à 4, dans lequel les données de configuration définissent de multiples machines à états associées à des groupes respectifs et une ou plusieurs interactions entre les groupes, et/ou
dans lequel les données de configuration comprennent une instruction pour effectuer, suite à un événement de transition défini, une transition vers un état spécifié d'un groupe spécifié parmi les groupes, dans lequel l'état spécifié comprend au moins un état initial défini et/ou un état le plus récent et/ou un état faisant suite à l'état le plus récent.

6. Configurateur (302; 402) de machine à états selon l'une quelconque des revendications 1 à 5, dans lequel les données de configuration (404) définissent de multiples machines à états respectivement associées à un niveau spécifique de rôle, et l'instruction de machine à états, suite à son exécution par le contrôleur, sélectionne l'une des multiples machines à états pour commander le système industriel en fonction d'un rôle déterminé, ou
dans lequel l'instruction de machine à états comprend au moins une instruction en langage Ladder et/ou une instruction en langage SFC (*Sequential Function Chart*) et/ou une instruction textuelle.

7. Configurateur (302; 402) de machine à états selon l'une quelconque des revendications 1 à 6, dans lequel l'instruction de machine à états est configurée pour commander, suite à son exécution par le contrôleur, l'exécution d'un programme de contrôleur selon la machine à états définie par les données de configuration (404).

8. Procédé de mise en oeuvre d'une commande de machine à états d'un processus industriel, comprenant :
la réception (902) de données de configuration (404) qui décrivent une machine à états (200; 702, 704, 706), comprenant la fourniture d'une interface (802) pour spécifier des états et des transitions disponibles de la machine à états,
dans lequel l'interface (802) affiche des commandes de transition sélectionnables dans une rangée de commandes de transition (804) et les états dans une colonne d'états (810) d'une matrice de priorité de transition (816), la matrice de priorité de transition (816) permettant à un utilisateur de sélectionner, pour chaque état de la colonne d'états (810), celle des commandes de transition d'une rangée de commandes de transition (804) qui va déclencher une transition d'un état de la colonne d'états vers un état de destination associé à la commande de transition, en entrant des valeurs de priorité dans des champs de la matrice de priorité de transition (816),
dans lequel les valeurs de priorité entrées dans les champs de la matrice de priorité de transition (816) pour un état de la colonne d'états déterminent à quelle commande la priorité sera donnée si au moins deux commandes activées sont reçues simultanément ; et
la compilation (906) des données de configuration (404) pour générer une instruction de machine à états configurée pour s'exécuter dans un contrôleur industriel pour faciliter la commande du processus industriel selon la machine à états (200; 702, 704, 706).

9. Procédé selon la revendication 8, comprenant en outre l'importation de l'instruction de machine à états dans un programme de commande industrielle pour son exécution par le contrôleur industriel.

10. Procédé selon la revendication 8 ou 9, comprenant en outre la génération, en fonction des données de configuration (404), d'un composant d'interface graphique qui affiche des informations d'état générées par l'instruction de machine à états.

11. Procédé selon l'une quelconque des revendications 8 à 10, comprenant en outre :
la définition, en fonction des données de configuration, de multiples machines à états ;
l'assignation, en fonction des données de configuration, des multiples machines à états à des groupes respectifs ; et
la définition, en fonction des données de configuration, d'au moins une transition d'état entre les groupes, et/ou
dans lequel la définition de l'au moins une transition d'état comprend la définition, en fonction des données de configuration, d'une transition vers au moins un état par défaut d'un groupe spécifié et/ou un état le plus récent du groupe spécifié et/ou un état faisant suite à l'état le plus récent du groupe spécifié.

12. Procédé selon l'une quelconque des revendications 8 à 11, comprenant en outre :
la définition, en fonction des données de configuration (404), de multiples machines à états ; et
l'assignation, en fonction des données de configuration (404), des multiples machines à états à des niveaux spécifiques de rôle respectifs, et/ou
dans lequel la compilation comprend la génération de l'instruction de machine à états pour amener le contrôleur industriel à sélectionner une des multiples machines à états pour commander le processus industriel en fonction d'un rôle déterminé.

13. Procédé selon l'une quelconque des revendications 8 à 12, comprenant en outre l'exécution de l'instruction de machine à états dans au moins un programme en langage Ladder et/ou un programme en langage SFC (*Sequential Function Chart*) et/ou un programme textuel structuré.

14. Support lisible par ordinateur sur lequel sont stockées des instructions exécutables par ordinateur qui, suite à leur exécution, font exécuter par un système informatique le procédé selon l'une des revendications 8 à 13.
